# EUROPÄISCHE PATENTSCHRIFT

(11) **EP 1 175 329 B1**
(45) Veröffentlichungstag und Bekanntmachung des Hinweises auf die Patenterteilung: **04.06.2003**
(21) Anmeldenummer: 00940140.7
(22) Anmeldetag: 14.04.2000
(51) Int. Cl.: B62D 55/20, B62D 55/12

(54) **RAUPENFAHRWERK**
TRACK-LAYING UNDERCARRIAGE
TRAIN DE ROULEMENT A CHENILLES

(30) Priorität: 27.04.1999 DE 19920025
(43) Veröffentlichungstag der Anmeldung: 30.01.2002
(73) Patentinhaber: Demag Mobile Cranes GmbH & Co. KG, 80333 München (DE)
(72) Erfinder: KNECHT, Alexander, D-66482 Zweibrücken (DE); NOSKE, Ingo, D-66822 Lebach (DE); RUTZ, Werner, D-66851 Queidersbach (DE)
(74) Vertreter: Meissner, Peter E., Dipl.-Ing.
(86) Internationale Anmeldenummer: DE0001238
(87) Internationale Veröffentlichungsnummer: WO00064728

(56) Entgegenhaltungen:
- US-A- 2 167 039
- US-A- 3 680 928
- US-A- 4 278 301
- US-A- 4 425 007
- US-A- 5 636 911

## Beschreibung

Die Erfindung betrifft ein Raupenfahrwerk, insbesondere für Krane, bestehend aus einem Leitrad, mehreren Laufrollen, einem Antriebsturas und einer Endloskette gemäß dem Oberbegriff des Patentanspruches 1.
Die Schrift US-A-4,278,301 offenbart ein Raupenfahrwerk mit mehreren Laufrollen, einer Endloskette und mit einem Antriebsturas, der am Umfang mit Kettenzähnen und auf beiden Seiten mit je einem Laufkranz versehen ist, wobei die Kettenzähne eine Evolventenverzahnung aufweisen.
Ein gattungsmäßiges Raupenfahrwerk ist aus der DE 27 20 332 C2 bekannt. Es weist einen einstückigen Antriebsturas auf, der im Umfang mit nockenartigen Kettenzähnen und auf beiden Seiten mit je einem Laufkranz versehen ist. Infolge der Durchmesserdifferenz zwischen dem größeren Durchmesser des Fußkreises der Kettenzähne und dem kleineren Außendurchmesser der Laufkränze wird je ein Spurkranz gebildet. Eine Endloskette, die über den Antriebsturas, einem Leitrad und mehreren Laufrollen geführt wird, besteht aus einzelnen, einstückig hergestellten, als Zweistegplatten ausgebildeten Kettengliedern, die mittels Bolzen und ineinandergreifender Außen- und Innenlaschen lösbar miteinander verbunden sind. Jedes Kettenglied weist zwei symmetrisch zur Mitte und im Abstand voneinander in Laufrichtung liegende Führungsstege auf. Auf der Oberseite sind sie mit einer mit den Laufkränzen zusammenwirkenden geraden Auflagefläche und auf der Innenseite mit einer mit dem jeweiligen Spurkranz des Antriebsturas zusammenwirkenden Führungsfläche versehen. Zwischen den beiden Führungsstegen ist ein die beiden Stege verbindender Nocken angeordnet, der mit den Kettenzähnen zusammenwirkt. Der Nocken ist auf beiden Seiten mit geraden Eingriffsflächen versehen, die in eine Schneide auslaufen. Im Übergang von den ebenen Eingriffsflächen zur Bodenplatte des Kettengliedes weist der zweiseitige Nocken beidseitig eine Ausnehmung auf.

Aufgabe der Erfindung ist es, ein gattungsmäßiges Raupenfahrwerk so weiterzuentwickeln, um durch Verringerung der Flächenpressung den Verschleiß zu minimieren und die Führung der Endloskette zu verbessern, bei unvermindert hoher Übertragungsleistung.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Lösungsgemäß weist der Antriebsturas eine Evolventenverzahnung auf, die mit einer geraden Flanke des nockenartigen Elementes kämmt. Durch diese Verzahnungsgeometrie gilt näherungsweise für die Paarung Antriebsturas - Kettenglied ein System Zahnrad - Zahnstange mit den nachfolgend aufgeführten Vorteilen.
- Die Flächenpressung zwischen Antriebsturas und Endloskette kann durch Variation der Evolventenlinie verändert werden.
- Beim Auslauf der Endloskette verschiebt sich die Kontaktstelle zwischen Antriebsturas und nockenartigem Element der Endloskette entlang der Evolvente nach außen, d.h. der Verschleiß verteilt sich auf einen größeren Bereich.
- Die Kraftübertragung befindet sich im Bereich der Mitte der Evolventenzahnflanke, d.h. die Zahnspitze des sich im Kraftschluß befindlichen Zahnes des Antriebsturas wird nicht belastet.
- Eine Evolventenverzahnung ist unempfindlich gegen Änderung des Achsabstandes der kämmenden Kettenglieder. Im vorliegenden System hat also ein Aufsteigen der Endloskette am Antriebsturas aufgrund von Kettenlängung oder eingedrungenem Schmutz keine Auswirkung auf die Kinematik.

Nach einem weiteren Merkmal weist die Oberseite des jeweiligen Führungssteges eine konkav gekrümmte Auflagefläche auf, die mit der konvex gekrümmten Laufkranzfläche des Antriebsturas zusammenwirkt. Vorzugsweise ist der Innendurchmesser der konkav gekrümmten Auflagefläche gleich dem Außendurchmesser der konvex gekrümmten Laufkranzfläche. Durch diese Ausgestaltung wird eine definierte Lage zum Antriebsturas gewährleistet, so daß kein Verkippen auftreten kann. Außerdem übernehmen in bekannter Weise die beiden innenliegenden Flächen des Führungssteges die Führung des Antriebsturas und die beiden außen liegenden Flächen übernehmen die seitliche Führung zwischen den Laufrollen.

Von weiterem Vorteil ist, daß durch die Form des Kettenzahnes und durch das Vergrößern der Öffnung der Endloskette beim Auflaufen auf den Antriebsturas das Austreiben des Schmutzes begünstigt wird.

Nach einem weiteren Merkmal wird der Antriebsturas mehrteilig ausgebildet mit einem mittig liegenden Zahnkranz und zwei lösbar damit befestigten Laufkränzen. Diese Anordnung ermöglicht es, den Zahnkranz aus einem verschleißfesteren Werkstoff herzustellen. Dadurch wird eine höhere Standzeit des Antriebsturas gegenüber Schmutz und Abrieb Endloskette - Antriebsturas erreicht.

Um bei der gewählten Ausgestaltung des Kettengliedes weiterhin große Kräfte übertragen zu können, sind auf einer Längsseite sechs Außenlaschen und auf der gegenüberliegenden Seite versetzt dazu vier Innenlaschen angeordnet. Beim Aneinanderhängen zweier Kettenglieder werden jeweils drei Außenlaschen und zwei Innenlaschen durch je einen Kettenbolzen verbunden, so daß sich eine zweischnittige Verbindung ergibt, mit der hohe Kräfte übertragen weren können. Die Sicherung des Kettenbolzens gegen axiales Verrutschen erfolgt mittels einer Schraube-Mutter-Verbindung, die jeweils an der ersten und dritten Außenlasche an der Außenseite angeordnet wird.

In der Zeichnung wird anhand eines Ausführungsbeispieles die lösungsgemäße Ausgestaltung des Raupenfahrwerkes näher erläutert. Es zeigen:
- Figur 1: eine Vorderansicht eines Antriebsturas mit einem Teil der Endloskette,
- Figur 2: eine Teilansicht in Richtung X in Figur 1,
- Figur 3: eine Draufsicht eines Kettengliedes in Richtung Y in Figur 2,
- Figur 4: einen Schnitt in Richtung A-B in Figur 3,
- Figur 5: eine Seitenansicht im Bereich der Laufrollen, und
- Figur 6: eine Ansicht in Richtung X in Figur 5.

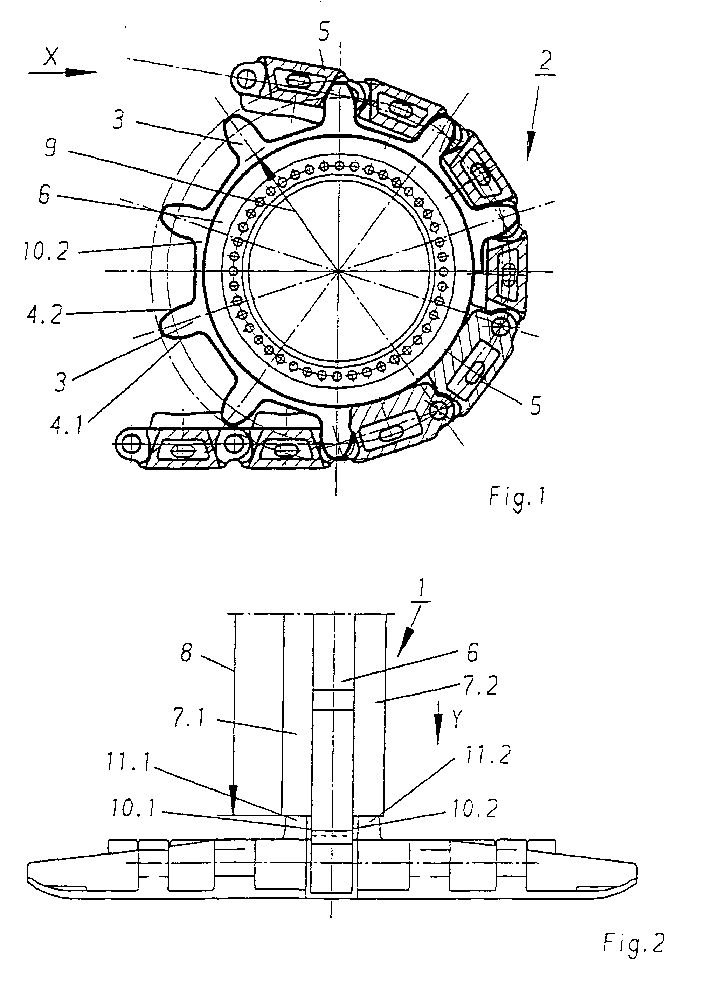

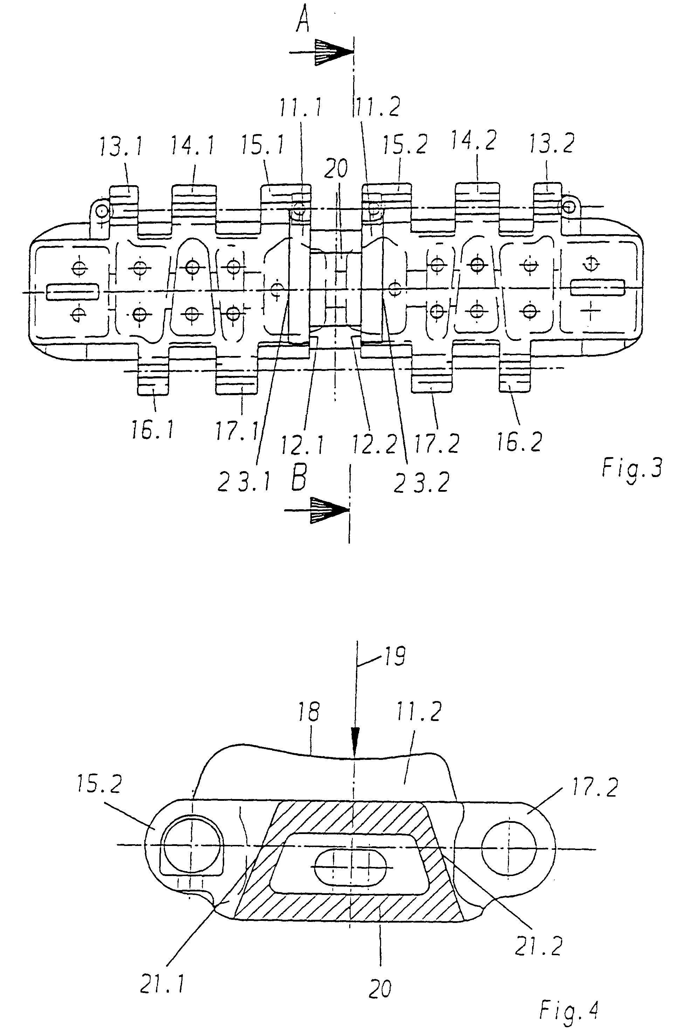

Figur 1 zeigt eine Vorderansicht eines Antriebsturas 1 mit einem Teil der Endloskette 2. Lösungsgemäß weist der Antriebsturas 1 eine Evolventenverzahnung auf. Jeder Zahn 3 weist zwei Flanken 4.1, 4.2 auf, deren Kontur einer Evolvente entspricht. Die Endloskette besteht aus einzelnen, einstückig hergestellten Kettengliedern 5 (Figur 3), die lösbar miteinander verbunden sind. Die Einzelheiten dazu werden in den nachfolgenden Figuren beschrieben. Im Unterschied zum bekannten Stand der Technik ist der Antriebsturas 1 mehrteilig ausgebildet mit einem mittleren Zahnkranz 6 und zwei lösbar damit verbundenen Laufkränzen 7.1, 7.2. In bekannter Weise ist der Außendurchmesser 8 des jeweiligen Laufkranzes 7.1, 7.2 geringer als der Durchmesser 9 des Fußkreises des Zahnkranzes 6. Infolge dieser Durchmesserdifferenz wird am Zahnkranz 6 auf beiden Seiten je ein Spurkranz 10.1,10.2 gebildet. Das einzelne Kettenglied 5 weist ebenfalls in bekannter Weise zwei symmetrisch in der Mitte und in einem Abstand voneinander angeordnete Führungsstege 11.1, 11.2 auf. Die jeweilige Innenfläche 12.1 bzw. 12.2 der beiden Führungsstege 11.1, 11.2 wirkt als Führung zusammen mit dem jeweiligen Spurkranz 10.1 bzw. 10.2 der Laufkränze 7.1, 7.2.

Die lösbare Befestigung der einzelnen Kettenglieder 5 erfolgt mittels auf den Längsseiten angeordneter Außen- 13.1-15.1; 13.2-15.2 und Innenlaschen 16.1, 17.1, 16.2, 17.2 und hier nicht dargestellter Kettenbolzen, die durch die in den Figuren 3 und 4 dargestellten Bohrungen der Laschen gesteckt werden. Vorzugsweise sind es insgesamt sechs Außenlaschen 13.1, 13.2 - 15.1, 15.2 auf der einen Längsseite und in den Lücken dazwischenliegend vier Innenlaschen 16.1, 16.2, 17.1, 17.2 auf der anderen Längsseite. Die mit gestrichelten Linien dargestellten Ausnehmungen im mittleren Bereich des Kettengliedes 5 dienen der Gewichtsreduzierung des Massivteiles. Die Sicherung der Kettenbolzen gegen axiales Verrutschen erfolgt mittels einer hier nicht dargestellten Schraube-Mutter-Verbindung, die an der jeweiligen ersten 13.1 bzw. 13.2 und an der dritten Außenlasche 15.1 bzw. 15.2 angeordnet werden.

Das verbesserte Zusammenwirken zwischen den Kettengliedern 5 und den Laufkränzen 7.1, 7.2 zeigt Figur 4. Lösungsgemäß ist die Oberseite 18 des Führungssteges 11.2 konkav gekrümmt, wobei vorzugsweise der Innendurchmesser 19 der konkaven Krümmung gleich ist dem Außendurchmesser 8 des jeweiligen Laufkranzes 7.1, 7.2. Das zwischen beiden Führungsstegen 11.1,11.2 liegende und die beiden Führungsstege verbindende nockenartige Element 20 weist in beiden Endbereichen je eine gerade Flanke 21.1, 21.2 auf, die mit der als Evolvente ausgebildeten Flanke 4.1,4.2 des jeweiligen Zahnes 3 des Antriebsturas 1 kämmen.

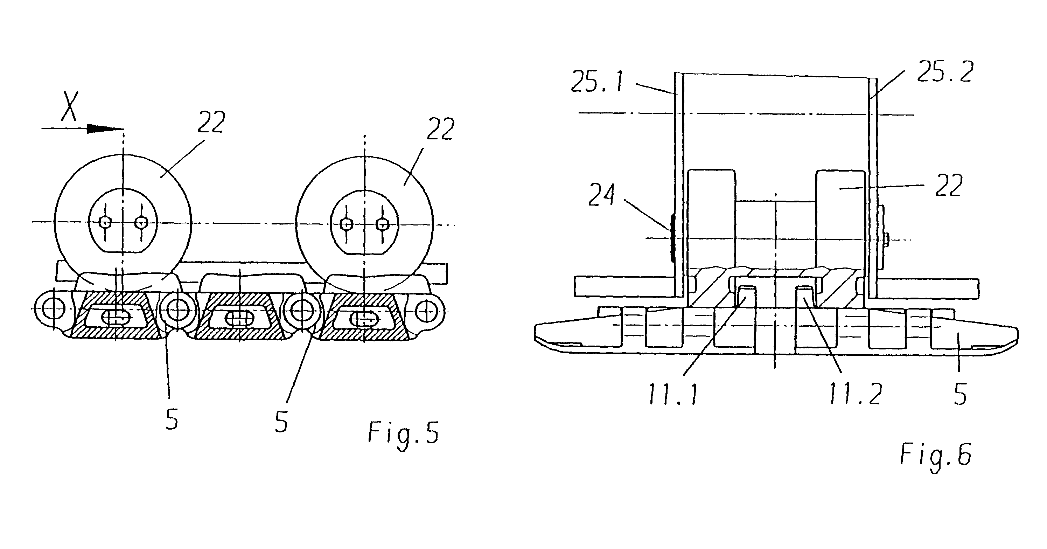

Die Figuren 5 und 6 zeigen die verbesserte Führung für die Laufrollen 22 durch die Außenfläche 23.1, 23.2 (Figur 3) des jeweiligen Führungssteges 11.1, 11.2. Die Laufrollen 22 sind mittels einer Achse 24 zwischen zwei Stegen 25.1, 25.2 gelagert.

### Bezugszeichenliste:

| | |
|---|---|
| 1 | Antriebsturas |
| 2 | Endloskette |
| 3 | Zahn |
| 4 | Zahnflanke |
| 5 | Kettenglied. |
| 6 | Zahnkranz |
| 7 | Laufkranz |
| 8 | Außendurchmesser des Laufkranzes |
| 9 | Fußkreisdurchmesser |
| 10 | Spurkranz |
| 11 | Führungssteg |
| 12 | Innenfläche Führungssteg |
| 13,14,15 | Außenlasche |
| 16,17 | Innenlasche |
| 18 | Oberseite Führungssteg |
| 19 | Innendurchmesser |
| 20 | nockenartiges Element |
| 21 | Flanke |
| 22 | Laufrolle |
| 23 | Außenfläche Führungssteg |
| 24 | Achse |
| 25 | Steg |

## Patentansprüche

1. Raupenfahrwerk, insbesondere für Krane, bestehend aus
- mehreren Laufrollen (22),
- mindestens einem Antriebsturas (1), der am Umfang mit einer Evolventenverzahnung (3, 6) und auf beiden Seiten mit je einem Laufkranz (7) versehen ist, wobei infolge der Durchmesserdifferenz zwischen dem größeren Durchmesser des Fußkreises der Kettenzähne (3) und dem kleineren Außendurchmesser (8) der Laufkränze (7) je ein Spurkranz (10) gebildet wird,
- einer Endloskette (2), mit einzelnen, einstückig hergestellten, je eine Bodenplatte aufweisenden Kettengliedern (5), die mittels Bolzen und mehrerer ineinandergreifender Außen- und Innenlaschen (13 - 17) lösbar miteinander verbunden sind, wobei jedes Kettenglied (5) zwei symmetrisch zur Mitte und im Abstand voneinander angeordnete in Laufrichtung liegende Führungsstege (11) aufweist, mit einer mit den Laufkränzen (7) zusammenwirkenden Auflagefläche und einer mit dem jeweiligen Spurkranz (10) des Antriebsturas (1) zusammenwirkenden Führungsfläche und zwischen beiden Führungsstegen (11) ein die beiden Stege verbindendes, tiefer liegendes nockenartiges Element (20) angeordnet ist, das mit den Kettenzähnen (3) des Antriebsturas (1) kämmt,
**dadurch gekennzeichnet,**
**daß** der Antriebsturas (1) eine Evolventenverzahnung aufweist, die mit einer geraden Flanke (21.1,21.2) des nockenartigen Elementes (20) kämmt und daß die Oberseite (18) des jeweiligen Führungssteges (11.1,11.2) eine konkav gekrümmte Auflagefläche aufweist, die mit der konvex gekrümmten Laufkranzfläche des Antriebsturas (1) zusammenwirkt und die auf der Außenseite liegende Fläche (23.1,23.2) des jeweiligen Führungssteges (11.1,11.2) die seitliche Führung zwischen den Laufrollen (22) bildet.

2. Raupenfahrwerk nach Anspruch 1,
**dadurch gekennzeichnet,**
**daß** der Innendurchmesser (19) der konkav gekrümmten Auflagefläche dem Außendurchmesser (8) des jeweiligen Laufkranzes (7.1,7.2) entspricht

3. Raupenfahrwerk nach einem der Ansprüche 1 bis 2,
dadurch gekenzeichnet,
daß der Antriebsturas (1) mehrteilig ist und einen in der Mitte liegenden Zahnkranz (6) und zwei lösbar damit verbundene Laufkränze (7.1, 7.2) aufweist.

4. Raupenfahrwerk nach Anspruch 3,
**dadurch gekennzeichnet,**
**daß** der Zahnkranz (6) aus einem verschleißfesteren Werkstoff hergestellt ist als die Laufkränze (7.1,7.2).

5. Raupenfahrwerk nach einem der Ansprüche 1 bis 4,
**dadurch gekennzeichnet,**
**daß** jedes Kettenglied (5) auf einer Längsseite sechs Außenlaschen (13.1-15.1; 13.2-15.2) und auf der gegenüberliegenden Längsseite versetzt dazu vier Innenlaschen (16.1; 17.1; 16.2; 17.2) aufweist.

6. Raupenfahrwerk nach Anspruch 5,
**dadurch gekennzeichnet,**
**daß** symmetrisch zur Mitte jeweils drei Außenlaschen (13.1-15.1 bzw. 13.2-15.2) und zwei dazugehörige Innentaschen (16.1; 17.1 bzw. 16.2; 17.2) durch einen gegen axiales Verrutschen gesicherten Kettenbolzen verbindbar sind.

7. Raupenfahrwerk nach Anspruch 6,
**dadurch gekennzeichnet,**
**daß** das Sicherungselement eine Schraube-Mutter-Verbindung ist, die jeweils an der ersten Außenlasche (13.1 bzw. 13.2) und an der dritten Außenlasche (15.1 bzw. 15.2) auf der Außenseite anordbar ist.

## Claims

1. Crawler undercarriage, particularly for cranes, consisting of
- several rollers (22),
- at least one head sprocket (1), which has involute gear teeth (3, 6) on its circumference and a running tread (7) on each of its two sides, a wheel flange (10) being formed in each case as a result of the difference in diameter between the larger diameter of the root circle of the teeth (3) and the smaller external diameter (8) of the running treads (7),
- a continuous crawler chain (2) with separate track links (5) that are made individually, which each have a base plate, and which are connected to each other, in such a way that they can be disconnected, by means of bolts and a number of intermeshing external and internal straps (13-17), each link (5) having two guide bars (11) which are positioned symmetrically in relation to the centre and at a distance from each other in the direction of travel, with a bearing surface operating in conjunction with the running treads (7) and a guide surface operating in conjunction with the relevant wheel flange (10) of the head sprocket (1); and between the two guide bars (11) there is a cam-like element (2), positioned lower down and linking the two bars, which meshes with the chain teeth (3) of the head sprocket (1),
**characterised in that**
the head sprocket (1) has involute gear teeth that mesh with a straight flank (21.1, 21.2) of the cam-like element (20), and that the top face (18) of each guide bar (11.1, 11.2) has a concave curved bearing surface that operates in conjunction with the convex curved running tread surface of the head sprocket (1), and the external side face (23.1, 23.2) of each guide bar (11.1, 11.2) forms the lateral guidance between the rollers (22).

2. Crawler undercarriage as in Claim 1,
**characterised in that**
the internal diameter (19) of the concave curved bearing surface corresponds to the external diameter (8) of the relevant running tread (7.1, 7.2).

3. Crawler undercarriage as in one of Claims 1 to 2,
**characterised in that**
the head sprocket (1) is in several parts and has a toothed ring (6) in the centre and two running treads (7.1, 7.2) connected to it in such a way that they can be disconnected.

4. Crawler undercarriage as in Claim 3,
**characterised in that**
the toothed ring (6) is made from a material which has a greater resistance to abrasion than that of the running treads (7.1, 7.2).

5. Crawler undercarriage as in one of Claims 1 to 4,
**characterised in that**
each track link (5) has, on one side wall, six external straps (13.1 - 15.1; 13.2- 15.2) and, on the opposite side wall and offset in relation to them, four internal straps (16.1; 17.1; 16.2; 17.2).

6. Crawler undercarriage as in Claim 5,
**characterised in that**
in each case three external straps (13.1-15.1 or 13.2- 15.2) and two corresponding internal straps (16.1; 17.1 or 16.2; 17.2) can be connected, symmetrically in relation to the centre, by means of a chain stud which is secured to prevent axial slippage.

7. Crawler undercarriage as in Claim 6,
**characterised in that**
the securing element is a screw and nut connection which can be positioned on the outside, in each case on the first outer strap (13.1 or 13.2) and the third outer strap (15.1 or 15.2).

## Revendications

1. Train de roulement, en particulier pour des grues, comportant :
- plusieurs rouleaux de roulement (22),
- au moins un tambour d'entraînement (1), qui est muni, à la périphérie, d'une denture à développante (3, 6) et, sur les deux côtés, à chaque fois, d'une bande de roulement (7), un boudin (10) étant formé, à chaque fois, par suite de la différence de diamètres entre le diamètre plus grand du cercle de pied des dents de chaîne (3) et le diamètre externe plus petit (8) des bandes de roulement (7),
- une chaîne sans fin (2), ayant des maillons de chaîne (5) individuels, fabriqués en une pièce, présentant à chaque fois une plaque de fond, qui sont reliés ensemble de façon amovible au moyen d'axes et de plusieurs attaches internes et externes (13, 17) s'engageant les unes dans les autres, chaque maillon de chaîne (5) présentant deux barrettes de guidage (11) s'étendant dans la direction de marche, agencées à distance l'une de l'autre et symétriques par rapport au centre, ayant une surface d'appui coopérant avec les bandes de roulement (7) et une surface de guidage coopérant avec le boudin respectif (10) du tambour d'entraînement (1) et, entre les deux barrettes de guidage (11), un élément (20) du type saillie, se trouvant plus profondément, reliant les deux barrettes est agencé, lequel engrène avec les roues de chaîne (3) du tambour d'entraînement (1),
**caractérisé en ce que** le tambour d'entraînement (1) présente une denture à développante, qui engrène avec un flanc droit (21.1, 21.2) de l'élément (20) du type saillie, et **en ce que** le dessus (18) de la barrette de guidage respective (11.1, 11.2) présente une surface d'appui cintrée de façon concave, qui coopère avec la surface de bande de roulement cintrée de façon convexe du tambour d'entraînement (1), et la surface (23.1, 23.2), se trouvant sur le côté externe, de la barrette de guidage respective (11.1, 11.2) forme le guide latéral entre les rouleaux de roulement (22).

2. Train de roulement selon la revendication 1,
**caractérisé en ce que** le diamètre interne (19) de la surface d'appui cintrée de façon concave correspond au diamètre externe (8) de la bande de roulement respective (7.1, 7.2).

3. Train de roulement selon une des revendications 1 à 2,
**caractérisé en ce que** le tambour d'entraînement (1) est en plusieurs pièces et présente une couronne dentée (6) se trouvant au centre et deux bandes de roulement (7) reliées à celle-ci de façon amovible.

4. Train de roulement selon la revendication 3,
**caractérisé en ce que** la couronne dentée (6) est fabriquée en une matière plus résistante à l'usure que les bandes de roulement (7.1, 7.2).

5. Train de roulement selon une des revendications 1 à 4,
**caractérisé en ce que** chaque maillon de chaîne (5) présente, sur un côté longitudinal, six attaches externes (13.1 - 15.1; 13.2 - 15.2) et, sur le côté longitudinal opposé, quatre attaches internes (16.1; 17.1; 16.2 ; 17.2) décalées par rapport à celles-ci.

6. Train de roulement selon la revendication 5,
**caractérisé en ce que**, de façon symétrique par rapport au centre, à chaque fois trois attaches externes (13.1 - 15.1 ou 13.2 - 15.2) et deux attaches internes correspondantes (16.1; 17.1 ou 16.2; 17.2) peuvent être reliées par un axe de chaîne garanti contre un glissement axial.

7. Train de roulement selon la revendication 6,
**caractérisé en ce que** l'élément de sécurité est une liaison vis-écrou, qui peut être agencée, à chaque fois, sur la première attache externe (13.1 ou 13.2) et sur la troisième attache externe (15.1 ou 15.2) sur le côté externe.
